(19) Europäisches Patentamt
European Patent Office
Office européen des brevets

(11) **EP 2 525 734 B1**

(12) **FASCICULE DE BREVET EUROPEEN**

(45) Date de publication et mention
de la délivrance du brevet:
**25.03.2015 Bulletin 2015/13**

(21) Numéro de dépôt: **11704651.6**

(22) Date de dépôt: **18.01.2011**

(51) Int Cl.:
***A61C 1/06*** *(2006.01)*   ***A61C 1/18*** *(2006.01)*

(86) Numéro de dépôt international:
**PCT/FR2011/050080**

(87) Numéro de publication internationale:
**WO 2011/089348 (28.07.2011 Gazette 2011/30)**

(54) **APPAREIL POUR ENTRAÎNER EN MOUVEMENT DES OUTILS UTILISÉS EN CHIRURGIE**

VORRICHTUNG ZUR BEWEGUNG VON IN DER CHIRURGIE VERWENDETEN WERKZEUGEN

APPARATUS FOR MOVING TOOLS USED IN SURGERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.01.2010 FR 1050315**

(43) Date de publication de la demande:
**28.11.2012 Bulletin 2012/48**

(73) Titulaire: **Micro-Mega International Manufactures
25000 Besancon (FR)**

(72) Inventeur: **GARCIA, Philippe
F-70190 Bussieres (FR)**

(74) Mandataire: **Poupon, Michel
Cabinet Bleger-Rhein-Poupon
L'Escurial - Technopole de Brabois
17, avenue de la Forêt de Haye
54519 Vandoeuvre-Les-Nancy Cedex (FR)**

(56) Documents cités:
**US-A- 5 974 615    US-A1- 2002 025 504
US-B1- 6 350 125**

**Description**

**Domaine technique et état de l'art**

L'invention concerne un appareil pour entraîner en mouvement des outils utilisés en chirurgie, notamment en chirurgie dentaire, appareil du type composé d'une tête dans laquelle se fixe un outil, d'un manche sur lequel est fixée la tête et de moyens de transmission de mouvement entre un moteur et l'outil. De tels appareils sont communément appelés pièce à main droite ou contre-angle, selon leur forme générale externe.

De tels appareils sont notamment utilisés en chirurgie dentaire, en particulier pour les traitements endodontiques. Pour nettoyer et aléser les canaux dentaires, un dentiste utilise des outils ou instruments endodontiques communément appelés instruments canalaires. Au début de la dentisterie endodontique, ces instruments étaient utilisés manuellement, les mouvements de l'instrument, rotation et / ou va et vient étant assurés par les doigts du dentiste.

Progressivement, l'évolution de la technique des pièces à main dentaires a permis de mécaniser ce travail manuel fastidieux en proposant différentes solutions de mouvement.

On a d'abord vu apparaître des contre-angles rotatifs alternatifs, puis des mouvements de rotation alternative combinés à des mouvements de va et vient axial de l'instrument canalaire, les deux mouvements ayant la même fréquence.

Parallèlement, on a également vu apparaître des pièces à main à vibration ainsi que des pièces à main imprimant un mouvement de va et vient axial à l'instrument canalaire.

Plus récemment, le nickel-titane utilisé pour la fabrication des instruments canalaires a permis d'obtenir des instruments présentant une meilleure résistance à la fatigue, et par là-même a permis de les entraîner en rotation continue tout en limitant les risques de rupture par fatigue.

Certains nouveaux instruments canalaires, très résistants en fatigue car également en Nickel-Titane, sont conçus pour fonctionner en mouvement de va et vient axial rapide de l'ordre de 3000 à 5000 aller et retour par minute pour une course d'environ 0,4 mm.

**Description de l'invention**

Un but de l'invention est d'améliorer encore l'efficacité de ces derniers instruments.

Pour cela, l'invention propose un nouvel appareil, par ailleurs conforme à un appareil tel que décrit ci-dessus, et caractérisé en ce qu'il comprend des moyens de transmission de mouvement d'un moteur jusqu'à l'outil, les moyens de transmission comprenant un premier axe de transmission pour transmettre un premier mouvement à une première fréquence et un deuxième axe de transmission pour transmettre un deuxième mouvement à une deuxième fréquence, la première fréquence étant différente de la deuxième fréquence dans un rapport 20 à 120.

Le premier mouvement est par exemple un mouvement alternatif de translation et le deuxième mouvement est par exemple un mouvement de rotation.

Des essais ont montré que l'efficacité de l'outil est améliorée si les fréquences des mouvements sont différentes. L'amélioration est particulièrement significative si le rapport entre les deux fréquences est important, par exemple dans un rapport 20 à 120. On rappelle que la fréquence d'un mouvement périodique est la mesure du nombre de fois que le phénomène périodique se reproduit par unité de temps. Ainsi, à titre d'exemple, une fréquence de va et vient rapide de l'ordre de 3000 à 6000 allers et retours par minute, associé à une fréquence de rotation lente de l'ordre de 50 à 150 tours par minute donne de bons résultats.

Pour la mise en oeuvre de l'invention, les moyens de transmission peuvent comprendre un premier axe de transmission du premier mouvement et un deuxième axe de transmission du deuxième mouvement, partiellement ou totalement coaxiaux. L'appareil ainsi obtenu est plus compact.

Selon une variante, l'appareil est adapté pour un outil standard. Pour cela une douille maintient et entraîne en mouvement l'outil dans la tête de l'appareil. Et le premier axe d'entraînement comprend à une extrémité, côté tête de l'appareil, un maneton excentrique adapté pour coopérer avec une gorge de la douille, de sorte qu'un mouvement de rotation du premier axe d'entraînement génère le mouvement alternatif de va et vient de la douille. L'appareil peut ainsi être utilisé avec tous les outils conformes à la norme ISO 1797-1. Le maneton est par exemple excentré de 0,05 à 0,4 mm, ce qui permet d'obtenir un mouvement de va et vient de l'outil d'une amplitude de 0,1 à 0,8 mm, bien appropriée au traitement d'un canal dentaire.

Selon une autre variante, l'appareil est adapté pour entraîner en rotation un outil comprenant un manche équipé d'un engrenage et d'une gorge. Un tel instrument est par exemple décrit dans le document FR 2 849 767. Dans l'appareil, le premier axe d'entraînement comprend à une extrémité un maneton excentrique adapté pour coopérer avec la gorge du manche de l'outil. Dans ce cas, l'appareil ne comporte pas de douille. La masse totale à mettre en mouvement et l'inertie qu'elle engendre sont plus faibles, ce qui facilite les mouvements, notamment le mouvement alternatif de translation.

Pour entraîner en rotation les deux axes de transmission à des fréquences différentes, les moyens d'entraînement peuvent être un réducteur de vitesse, dont un premier arbre du réducteur est utilisé pour entraîner en rotation le premier axe de transmission et générer ainsi le premier mouvement, et dont un deuxième arbre du réducteur est utilisé pour entraîner en rotation le deuxième axe de transmission et générer ainsi le deuxième mouvement. Le réducteur est par exemple du type train épicycloïdal, comprenant un ou plusieurs étages de réduction.

Un autre instrument de l'état de la technique est décrit dans le document US 5974615.

**Brève description des figures**

L'invention sera mieux comprise, et d'autres caractéristiques et avantages de l'invention apparaîtront à la lumière de la description qui suit d'exemples de réalisation d'appareils selon l'invention. Cet exemple est donné à titre non limitatif. La description est à lire en relation avec les dessins annexés dans lesquels :

• la figure 1 est une vue en coupe d'un appareil selon un premier mode de réalisation de l'invention,
• la figure 2 est une vue en coupe partielle d'un appareil selon un deuxième mode de réalisation de l'invention,

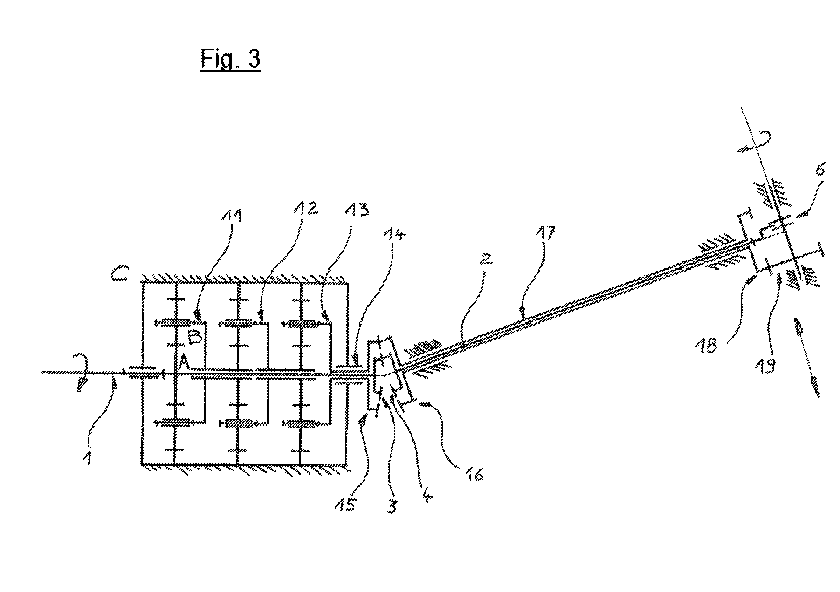

• la figure 3 est un schéma cinétique d'un appareil selon l'invention, et
• la figure 4 est une vue de détail de la tête de l'appareil de la figure 1.

**Description d'un mode de réalisation de l'invention**

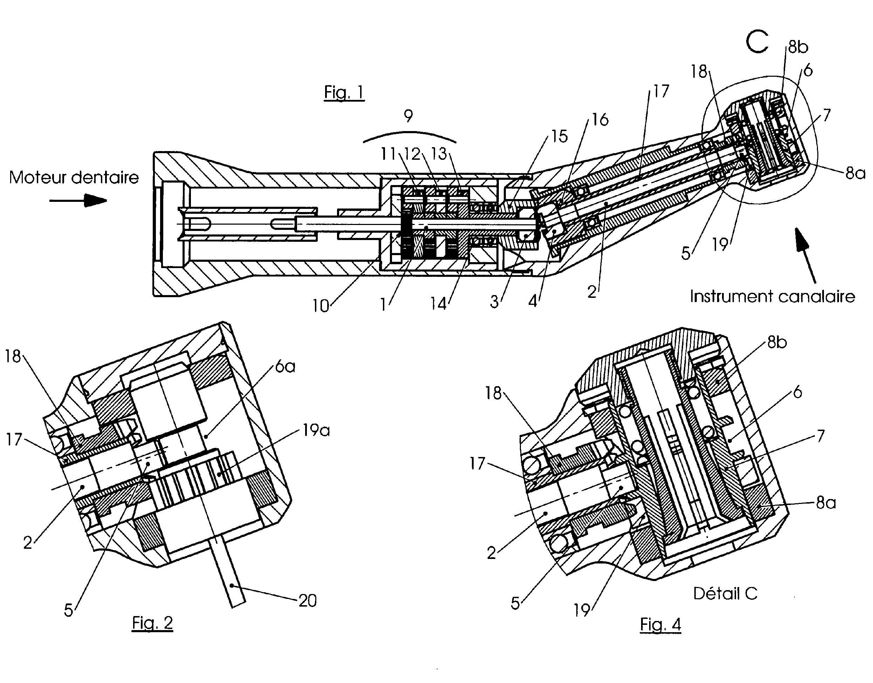

L'appareil représenté sur la figure 1 est du type contre-angle. Il comprend une tête dans laquelle l'outil est maintenu et entraîné en rotation et un manche fixé à la tête. A l'intérieur du manche sont positionnés les éléments des moyens de transmission, réalisés comme suit.

Un axe d'entrée 1 est entraîné en rotation par un moteur non représenté, dont la vitesse est classiquement réglable, par exemple entre 1000 et 40 000 tours / minutes.

Le premier mouvement est obtenu comme suit. L'axe 1 entraîne un premier axe de transmission 2 au travers d'un jeu de pignons 3 et 4. L'axe 2 est muni à son extrémité côté tête du contre-angle, d'un maneton 5 excentré par rapport à l'axe de rotation de l'axe de transmission 2. Dans l'exemple représenté, le maneton est excentré de 0,2 mm, ce qui permet d'obtenir un mouvement de va et vient de l'outil d'une amplitude de 0,4 mm. Le maneton 5 coopère avec une gorge 6 pratiquée à l'extérieur d'une douille 7 contenant le système de serrage et de rétention de l'instrument canalaire. Cette douille 7 est guidée en translation et en rotation par les coussinets 8a et 8b.

La rotation du moteur, donc de l'axe 1 puis de l'axe 2, va ainsi provoquer un mouvement de va et vient de la douille 7 ainsi que du système de serrage et de l'instrument canalaire qu'elle contient.

Le deuxième mouvement est obtenu comme suit. L'axe 1 entraine également un réducteur planétaire (ou train épicycloïdal) à trois étages 9 au travers d'un engrenage 10. Dans le réducteur, trois portes-satellites 11, 12 et 13 sont guidés et tournent autour de l'axe central 1, le porte- satellites de sortie 13 est en plus guidé dans un palier 14 constitué par exemple de deux roulements à billes. Un pignon 15 est fixé solidairement sur l'extrémité du porte-satellites de sortie 13 et engrène avec un pignon 16 solidaire d'un deuxième axe de transmission 17 positionné concentriquement à l'axe 2. A l'autre extrémité de l'axe 17, est fixé solidairement un pignon 18 qui engrène avec un pignon 19 fixé solidairement sur la douille 7.

La rotation du moteur, donc de l'axe 2 puis de l'axe 17, va ainsi provoquer un mouvement de rotation à vitesse réduite de la douille 7 ainsi que du système de serrage et de l'instrument canalaire qu'elle contient.

Dans l'exemple représenté, le réducteur 9 est constitué d'une couronne fixe C munie d'un engrenage à denture intérieure de 39 dents, et de trois étages de réduction dont les pignons d'entrée A comportent quinze dents et dont les pignons satellites B comporte douze dents. La liaison entre les axes 1 et 2 est constituée de deux pignons 3 et 4 ayant le même nombre de dents. La liaison entre le porte-satellites de sortie 13 et l'axe 17 est constituée de deux pignons 15 et 16 ayant le même nombre de dents. La liaison entre l'axe 17 et la douille 7 contenant l'instrument canalaire et son système de serrage, est constitué d'un pignon menant 18 de dix dents et d'un pignon mené 19 de quatorze dents. Dans ces conditions, le rapport de réduction de vitesse entre l'axe d'entrée 1 et la douille 7 est égal à :

$$R = [(15+39)/15]^3*(14/10)$$

Ainsi, quand on règle la vitesse de rotation de l'axe 1 (vitesse du moteur) à 5000 tours par minute, l'instrument canalaire fixé dans la tête du contre-angle va tourner à 5000 / R = 76 tours par minute tout en ayant un mouvement axial de va et vient de 5000 aller et retour par minute pour une course de 0,4 mm.

Il est bien évident que le mode de réalisation de la figure 1 n'est donné qu'à titre d'exemple, et de nombreuses variantes sont envisageables.

Par exemple, le rapport de réduction peut être ajusté de différentes manières : le réducteur 9 peut avoir d'autres rapports de réduction, avec plus ou moins d'étages de réduction planétaire ; le nombre de dents des pignons A, B et C pourrait être différent pour chacun des étages du réducteur à planétaire ; les couples de pignons 3 et 4 ou/et 15 et 16 peuvent avoir des nombres de dents différents, et donc des rapports de réduction différents de 1.

Le but d'un appareil selon l'invention est d'obtenir à partir d'une vitesse de rotation d'entrée, deux mouvements, l'un rotatif, l'autre linéaire alternatif, dont les plages de fréquence sont différentes, et de préférence très différentes.

Egalement, les couples de pignons 3 et 4 ou/et 15 et 16 sont indispensables dans l'exemple représenté dans la mesure où l'appareil est de type contre-angle avec un manche coudé. Toutefois, ces couples de pignon pourraient être supprimés dans le cas d'une pièce à main droite où l'axe d'entrée 1, l'axe de sortie du porte-satellites 13, les axes d'entraînement 2, 17 ont un même axe de rotation.

Il est à noter que la plupart des moteurs de dentisterie sont réglables entre 1000 et 40000 tours par minute. Pour utiliser le contre-angle décrit dans les conditions décrites ci-dessus, le dentiste doit donc régler la vitesse de son moteur à 5000 tours par minute ce qui est une contrainte puisque en général le dentiste laisse son moteur réglé à 40000 tours par minute, et fait ensuite confiance aux rapports de réduction ou de multiplication des ses différents contre-angles pour ajuster la vitesse de l'outil à la valeur correcte.

Aussi, une configuration particulièrement intéressante de la présente invention consiste à utiliser un moteur dont la vitesse est de 40000 tours par minute, ce qui évite au dentiste d'avoir à modifier le réglage de la vitesse de son moteur. La vitesse de rotation et la fréquence de va et vient de l'instrument peuvent être similaires à celle de l'exemple précédent, en adaptant les éléments du réducteur et le nombre de dents des différents pignons.

Pour cela, il est possible d'utiliser par exemple :

- un réducteur de 4 étages de réduction avec :

    ➢ une couronne fixe C comprenant 39 dents pour les deux premiers étages et 41 dents pour les deux derniers étages,
    ➢ des pignons d'entrée A comprenant 19 dents pour les deux premiers étages et 9 dents pour les deux derniers étages
    ➢ des pignons satellite B comprenant 10 dents pour les deux premiers étages et 16 dents pour les deux derniers étages,

- un pignon 3 de 14 dents et un pignon 4 de 12 dents,
- un pignon 15 de 20 dents et un pignon 16 de 24 dents, et
- un pignon 18 de 9 dents et un pignon 19 de 14 dents.

Si la vitesse de l'axe 1 est de 40000 tours / min et si l'axe 2 est entraîné par le porte-satellites de sortie du deuxième étage, la vitesse de rotation de l'axe 2, c'est-à-dire le nombre de va et vient appliqués à l'instrument canalaire, est égale à : $40000 \times (19/(19+39))^2 \times 14/12 = 5007,93$

Si la vitesse de l'axe 1 est de 40000 tours / min et si l'axe 17 est entraîné par le porte-satellites de sortie du quatrième étage, la vitesse de rotation de la douille 7 et de l'instrument canalaire est égale à :

$$40000 \times (19/(19+39))^2 \times (9/(9+41))^2 \times 20/24 \times 9/14 = 74,51 \text{ tours par minute.}$$

On voit donc que l'invention offre des possibilités multiples d'obtenir, à partir d'une vitesse de rotation d'entrée, deux mouvements, l'un de va et vient axial, l'autre rotatif, dans des plages de vitesses ou fréquences qui peuvent être très différentes l'une de l'autre.

Dans les exemples décrit ci-dessus, le mouvement de va et vient axial est plus rapide que le mouvement rotatif mais on peut noter que le même principe permet également d'obtenir un mouvement de va et vient plus lent que le mouvement de rotation ; il suffit pour cela d'intervertir les prises de mouvement en sortie du réducteur 9.

Selon la même conception, on peut obtenir plus de deux mouvements simultanés, il suffit de connecter d'autres axes de transmission à d'autres étages de réduction planétaire du même réducteur. Un mouvement additionnel pourrait par exemple être utilisé pour entraîner une pompe d'amenée d'un fluide au niveau de la tête de l'appareil ou au niveau de la zone de travail de l'outil.

La figure 1 présente un mode de réalisation de l'invention particulièrement adapté à l'entraînement d'un outil à manche normalisé, maintenu par un système de serrage classique à pince.

La figure 2 présente un mode de réalisation de l'invention particulièrement adapté à l'entraînement d'un outil à manche spécifique muni de son propre engrenage 19a et de sa propre gorge 6a. Par rapport à l'appareil de la figure 1, l'appareil de la figure 2 ne comprend pas de douille ni de système de serrage de l'outil. Le pignon 18 entraîne directement le pignon 19a de l'outil et le maneton 5 coopère directement avec une gorge 6a prévue à cet effet sur le manche de l'outil. Ainsi, la masse à entraîner en mouvement est limitée à la masse de l'outil. Elle est donc beaucoup plus légère que celle d'un système à manche normalisé, surtout si le manche spécifique est réalisé en plastique.

## Revendications

1. Appareil pour entraîner en mouvement des outils utilisés en chirurgie, notamment en chirurgie dentaire, appareil composé d'une tête dans laquelle est fixé un outil, d'un manche sur lequel est fixée la tête, et des moyens de transmission de mouvement d'un moteur jusqu'à l'outil, les moyens de transmission comprenant un premier axe de transmission (2) pour transmettre un premier mouvement à une première fréquence et un deuxième axe de transmission (17) pour transmettre un deuxième mouvement à une deuxième fréquence, **caractérisé en ce que** la première fréquence étant différente de la deuxième fréquence dans un rapport 20 à 120.

2. Appareil selon la revendication 1, dans lequel le premier mouvement est un mouvement alternatif de translation et dans lequel le deuxième mouvement est un mouvement de rotation.

3. Appareil selon l'une des revendications précédentes, dans lequel le premier axe de transmission et le deuxième axe de transmission sont partiellement ou totalement coaxiaux.

4. Appareil selon l'une des revendications 2 à 3, dans lequel :

   • une douille (7) maintient et entraîne en mouvement l'outil dans la tête de l'appareil,
   • le premier axe d'entraînement (2) comprend à une extrémité un maneton (5) excentrique adapté pour coopérer avec une gorge (6) de la douille (7), de sorte qu'un mouvement de rotation du premier axe d'entraînement génère le mouvement alternatif de va et vient de la douille.

5. Appareil selon l'une des revendications 2 à 3, adapté pour entraîner en rotation un outil comprenant un manche équipé d'un engrenage (19a) et d'une gorge (6a), dans lequel le premier axe d'entraînement (2) comprend à une extrémité un maneton (5) excentrique adapté pour coopérer avec la gorge du manche de l'outil.

6. Appareil selon l'une des revendications précédentes, dans lequel les moyens d'entraînement comprennent également un réducteur de vitesse, un premier arbre du réducteur étant utilisé pour entraîner en rotation le premier axe de transmission et générer le premier mouvement, et un deuxième arbre du réducteur étant utilisé pour entraîner en rotation le deuxième axe de transmission et générer le deuxième mouvement.

7. Appareil selon la revendication 6, dans lequel le réducteur est un train épicycloïdal, comprenant un ou plusieurs étages de réduction.

8. Appareil selon la revendication 7, dans lequel :

   • le premier arbre du réducteur est un arbre d'entrée ou un arbre intermédiaire du réducteur et / ou
   • le deuxième arbre du réducteur est un arbre intermédiaire ou un arbre de sortie du réducteur.

9. Appareil selon l'une des revendications précédentes, dans lequel les moyens de transmission sont également adaptés pour générer plus de deux mouvements.

## Patentansprüche

1. Vorrichtung zur Bewegung von in der Chirurgie, insbesondere in der Zahnchirurgie, verwendeten Werkzeugen, welche Vorrichtung aus einem Kopf, in dem ein Werkzeug befestigt ist, einem Griff, an dem der Kopf befestigt ist, und Mitteln zur Übertragung der Bewegung eines Motors an das Werkzeug besteht, wobei die Mittel zur Übertragung eine erste Übertragungswelle (2) zum Übertragen einer ersten Bewegung bei einer ersten Frequenz und eine zweite Übertragungsachse (17) zum Übertragen einer zweiten Bewegung bei einer zweiten Frequenz umfasst, **dadurch gekennzeichnet, dass** die erste Frequenz in einem Verhältnis von 20 bis 120 von der zweiten Frequenz unterschiedlich ist.

2.  Vorrichtung nach Anspruch 1, bei der die erste Bewegung eine translatorische Wechselbewegung ist, und bei der die zweite Bewegung eine Drehbewegung ist.

3.  Vorrichtung nach einem der vorhergehenden Ansprüche, bei der die erste Übertragungsachse und die zweite Übertragungsachse teilweise oder vollständig koaxial sind.

4.  Vorrichtung nach einem der Ansprüche 2 bis 3, bei der:

    • eine Hülse (7) das Werkzeug in dem Kopf der Vorrichtung hält und in Bewegung antreibt,
    • die erste Antriebswelle (2) an einem Ende einen exzentrischen Zapfen (5) umfasst, der angepasst ist, um mit einer Nut (6) der Hülse (7) so zusammenzuwirken, dass eine Drehbewegung der ersten Antriebswelle die Hin- und Her-Wechselbewegung der Hülse erzeugt.

5.  Vorrichtung nach einem der Ansprüche 2 bis 3, die angepasst ist, um ein Werkzeug, das einen mit einem Getriebe (19a) versehenen Griff und eine Nut (6a) umfasst, in Drehung anzutreiben, bei der die erste Antriebswelle (2) an einem Ende einen exzentrischen Zapfen (5) umfasst, der angepasst ist, um mit der Nut des Griffes des Werkzeugs zusammenwirken.

6.  Vorrichtung nach einem der vorhergehenden Ansprüche, bei der die Antriebsmittel ebenfalls ein Untersetzungsgetriebe umfassen, wobei eine erste Welle des Untersetzungsgetriebes verwendet wird, um die erste Übetragungsachse in Drehung anzutreiben und die erste Bewegung zu erzeugen eine zweite Welle des Untersetzungsgetriebes verwendet wird, um die zweite Übetragungsachse in Drehung anzutreiben und die zweite Bewegung zu erzeugen.

7.  Vorrichtung nach Anspruch 6, bei der das Untersetzungsgetriebe ein Planetengetriebe ist, das eine oder mehrere Untersetzungsstufen umfasst.

8.  Vorrichtung nach Anspruch 7, bei der:

    • die erste Welle des Untersetzungsgetriebes eine Antriebswelle oder eine Zwischenwelle des Untersetzungsgetriebes ist, und/oder
    • die zweite Welle des Untersetzungsgetriebes eine Zwischenwelle oder eine Abtriebswelle des Welle des Untersetzungsgetriebes ist.

9.  Vorrichtung nach einem der vorhergehenden Ansprüche, bei der die Übertragungsmittel auch angepasst sind, um mehr als zwei Bewegungen zu erzeugen.


**Claims**

1.  Apparatus for moving tools used in surgery, namely in dental surgery, which apparatus is comprised of a head, in which a tool is fastened, a handle on which the head is fastened, and means for transmitting the movement of a motor to the tool, the means for transmitting comprising a first transmission shaft (2) for transmitting a first movement at a first frequency and a second transmission axis (17) for transmitting a second movement at a second frequency, **characterized in that** the first frequency is different from the second frequency in a ratio from 20 to 120.

2.  Apparatus according to claim 1, wherein the first movement is an alternating translational movement, and wherein the second movement is a rotational movement.

3.  Apparatus according to one of the preceding claims, wherein the first transmission axis and second transmission axis are partially or completely coaxial.

4. Apparatus according to one of claims 2 to 3, wherein:

   • a sleeve (7) maintains and drives the tool in movement in the head of the apparatus,
   • the first driving shaft (2) comprises at one end an eccentric pin (5) adapted to cooperate with a groove (6) of the sleeve (7), so that a rotational movement of the first driving shaft generates the alternating reciprocating movement of the sleeve.

5. Apparatus according to one of claims 2 to 3, adapted for rotating a tool comprising a handle provided with a gear (19a) and a groove (6a), wherein the first driving shaft (2) comprises at one end an eccentric pin (5) adapted for cooperating with the groove of the handle of the tool.

6. Apparatus according to one of the preceding claims, wherein the driving means also comprise a reduction gear, a first shaft of the reduction gear being used for rotating the first transmission axis and generating the first movement, and a second shaft of the reduction gear being used for rotating the second axis and generating the second transmission movement.

7. Apparatus according to claim 6, wherein the reduction gear is a planetary gear set comprising one or more reduction stages.

8. Apparatus according to claim 7, wherein:

   • the first shaft of the reduction gear is an input shaft or an intermediate shaft of the reduction gear and/or
   • the second gear shaft is an intermediate shaft and an output shaft of the reduction gear.

9. Apparatus according to one of the preceding claims, wherein the transmission means are also adapted for generating more than two movements.

Fig. 1

Fig. 2

Fig. 4

Détail C

Instrument canalaire

Moteur dentaire

Fig. 3

## RÉFÉRENCES CITÉES DANS LA DESCRIPTION

**Documents brevets cités dans la description**

- FR 2849767

- US 5974615 A